# DEMANDE DE BREVET EUROPEEN

(11) **EP 0 704 574 A1**
(43) Date de publication de la demande: **03.04.1996**
(21) Numéro de dépôt: 95402158.0
(22) Date de dépôt: 27.09.1995
(51) Int. Cl.: E01C 11/16, E02D 3/00, C03C 25/02

(54) **Procédé de renforcement de sols, de couches de terrain ou de chaussées par des fils de verre**

(30) Priorité: 27.09.1994 FR 9411506
(71) Demandeur: ORGEL, F-92400 Courbevoie (FR)
(72) Inventeur: Gonthier, Michel, F-73000 Jacob Bellecombette (FR); Letalenet, Jean-Marc, F-60250 Bury (FR); Ghiretti, Jean-Pierre, F-73000 Bissy Chambery (FR); Rieunier, Jean-Baptiste, F-60180 Nogent sur Oise (FR)
(74) Mandataire: Breton, Jean-Claude

(57) **Abrégé**

L'invention concerne la production de couches ou de revêtements entrant dans la réfection ou la réalisation d'une route.

Elle consiste à associer des granulés minéraux et/ou un liant à base de matières hydrocarbonées et des fils de verre coupés dont la surface est revêtue d'au moins un composé antistatique choisi parmi les composés d'ammonium quaternaire.

## Description

L'invention concerne une technique d'association de matières minérales telles que pierres, sable, graviers et/ou liant à base de matières hydrocarbonées telles que bitume ou asphalte avec des fils de verre coupés.

Il est connu d'utiliser des fibres de différentes natures, métalliques, organiques, cellulosiques ou minérales, pour améliorer les propriétés des couches ou des revêtements obtenus par dépôt d'un mélange desdites fibres avec différentes matières minérales et/ou avec un liant à base de bitume ou d'asphalte. Il est connu, en particulier, d'associer ces matières et ce liant à des fibres de verre, notamment lorsque celles-là se présentent sous forme de fils coupés. Ainsi, d'après la demande de brevet international WO 91/17311, il est connu de réaliser des couches de forme de chaussée à partir d'un mélange de sables de qualité différentes et de fibres synthétiques. Ces fibres, qui peuvent être aussi bien organiques, minérales ou métalliques, augmentent la portance de la couche réalisée malgré la faible proportion desdites fibres dans ladite couche : de l'ordre de 0,2 à 5 pour mille en poids.

Il est également connu de réaliser des revêtements de chaussée constitués de gravillons, de bitume et de fibres, ou bien des couches intermédiaires formées uniquement de liant et de fibres.

Un revêtement de chaussée peut être réalisé, par exemple, selon la demande de brevet GB-A-2.081.603, en répartissant des fils de verre coupés sur une couche de liant fraîchement déposée, lesdits fils étant ensuite recouverts d'une couche de gravillons.

Selon un perfectionnement décrit par la demande de brevet anglais GB-A-2.121.853, les fils de verre peuvent être coupés in situ et projetés sur la couche de liant avant d'être éventuellement recouverts d'une deuxième couche de liant. Cette dernière demande préconise que la coupe des fils s'accompagne d'un soufflage d'air sous pression dans la chambre de distribution afin d'améliorer la répartition desdits fils. Il est également possible de réaliser des revêtements en procédant au mélange des fils de verre coupés et des constituants minéraux préalablement au dépôt dudit mélange sur la chaussée, comme l'indique la demande brevet EP-A-333.299. Cela permet d'éviter une mauvaise répartition des fils dans le revêtement mais au prix d'une opération supplémentaire.

Les demandes de brevet EP-A-456.502 et FR-A-2.661.929, qui décrivent la réalisation de couches intermédiaires, montrent que la coupe et la distribution des fils coupés sur une couche de liant présentent bien des difficultés, notamment en ce qui concerne la répartition la plus régulière possible des fils sur le liant.

Ainsi la première de ces demandes prévoit l'emploi d'un ventilateur à la partie supérieure de la chambre de distribution des fils. Ce ventilateur provoque une circulation d'air de haut en bas qui a pour effets de distribuer les fils coupés à la surface du liant et d'éviter la remontée de gouttelettes de bitume dans le compartiment de coupe. La seconde demande prévoit des moyens de guidage et de dispersion des fils coupés. Ces moyens sont constitués de tubes débouchant sur des entonnoirs qui s'ouvrent en direction de la chaussée, l'ensemble étant susceptible de se déplacer en hauteur et transversalement.

La présente invention a pour objet un procédé susceptible d'améliorer la répartition de fils de verre coupés au sein du mélange ou à la surface du mélange auquel ils sont associés.

La présente invention a pour objet un procédé permettant d'éviter un mélange préalable des fils coupés et des constituants auxquels ils sont associés ou de faciliter ledit mélange.

Les buts selon l'invention sont atteints dans le cadre d'un procédé de production d'une couche ou d'un revêtement déposé lors de la confection de rues, routes, d'aires de stationnement, etc, selon lequel on associe des matières minérales telles que pierres, sables, graviers et/ou un liant à base de matières hydrocarbonées telles que bitume ou asphalte avec des fibres, qui consiste :
- à déposer sur un substrat une couche de matière formée soit de granulés minéraux, soit à base de matières hydrocarbonées,
- à couper au-dessus de ladite couche des fils de verre dont la surface est revêtue d'au moins un composé antistatique choisi parmi les composés d'ammonium quaternaire, lesdits fils de verre coupés étant constitués d'une multiplicité de filaments dont le diamètre moyen est supérieur à 5 micromètres et se répartissant uniformément à la surface de ladite couche,
- puis à déposer éventuellement, sur cette couche une deuxième couche formée de la même matière que la première.

Le procédé selon l'invention peut être mis en oeuvre dans différentes conditions et avec différents matériaux.

Ainsi, le procédé selon l'invention peut être utilisé pour préparer un matériau granuleux comprenant des sables, des liants hydraudiques, etc, ce matériau étant destiné à constituer une couche de forme pour chaussées.

Une des mises en oeuvre de l'invention consiste :
- à déposer une couche de granulés minéraux sur un transporteur en mouvement,
- à couper des mèches de fils de manière à obtenir des fils coupés qui se répartissent par gravité à la surface de ladite couche,
- à recouvrir éventuellement lesdits fils par une couche de granulés minéraux,
- à mélanger lesdits granulés et lesdits fils, puis à répartir le mélange sous la forme d'une couche.

L'installation permettant cette mise en oeuvre comprend : un transporteur automatique, une trémie par l'intermédiaire de laquelle on dépose une certaine épaisseur de matériau sur le transporteur, une machine de coupe disposée au-dessus du transporteur en aval de la trémie, éventuellement une seconde trémie en aval de la machine de coupe.

La machine assurant la coupe des mèches de fil est de type connu, par exemple telle que décrite dans le brevet EP-B-0 040.145. Cette machine comprend un tambour-enclume dont la surface est lisse et un tambour équipé de lames, disposées à intervalles réguliers perpendiculairement à la périphérie, dont le tranchant vient en contact avec ladite surface dans la zone de coupe.

Le procédé selon l'invention peut être également utilisé pour réaliser des revêtements de chaussée constitués de gravillons, de liant à base de bitume et de fibres, ou bien des couches intermédiaires formées uniquement de liant et de fibres.

Ainsi, l'invention peut être mise en oeuvre dans le cadre d'un procédé selon lequel :
- on dépose sur le sol une couche de liant à base de matières hydrocarbonée,
- on coupe puis on projette des fils de verre sur ladite couche,
- on dépose éventuellement une seconde couche de liant, à base de matières hydrocarbonées, sur lesdits fils coupés,
- on dépose éventuellement sur la seconde couche de liant un matériau minéral tel que des gravilllons.

Dans ce mode de réalisation de l'invention, les mèches de fils traités peuvent être coupées par un ou plusieurs dispositifs de coupe (machines ou pistolets) selon qu'il s'agit de la réfection localisée d'une chaussée ou de sa confection.

Les fibres utilisées sont, de préférence, constituées exclusivement de fils de verre coupés à une longueur prédéterminée. Les filaments qui constituent ces fils ont un diamètre moyen supérieur à 5 micromètres et, de préférence, égal ou supérieur à 9 micromètres. Ces fils sont extraits de pelotes ou de bobines et coupés in situ au-dessus de la matière ou du mélange de constituants auquel on désire les asssocier. Ces enroulements ou bobines sont obtenus par bobinage d'une mèche constituée d'une multiplicité de fils, généralement alors appelés fils de base.

Le dépôt du composé d'ammonium quaternaire à la surface des fils est réalisé selon des techniques connues. L'une des techniques couramment utilisées consiste à prendre une multiplicité d'enroulements de fils, à extraire le fil de chaque enroulement et à le traiter par une solution aqueuse du composé d'ammonium quaternaire choisi, à rassembler l'ensemble des fils ainsi traités en une mèche et à bobiner ladite mèche sur un support en rotation. On obtient ainsi soit une pelote, soit une bobine selon que le support est enlevé ou non après bobinage. Dans le premier cas, la mèche est extraite depuis l'intérieur de la pelote, à la dévidée ; dans le second cas, elle est extraite de l'extérieur de la bobine, à la défilée.

La quantité de composé d'ammonium quaternaire déposée sur le fil est exprimée sous forme d'extrait sec, comprise entre environ 0,04 % et 0,3 % du poids de verre. Lorsque la quantité de composé d'ammonium est inférieure à 0,04 %, le comportement du fil lors de la coupe et sa répartition ne se distinguent pas de ceux d'un fil ensimé ordinaire qui n'a pas subi de traitement ultérieur particulier. Au-delà de 0,3 %, le composé d'ammonium quaternaire réagit avec certains des constituants de l'ensimage déjà déposé sur le fil lors de sa fabrication, phénomène qui a pour effet de diminuer sa raideur et son intégrité. De plus, au-delà de cette teneur, le coût de ce traitement devient prohibitif. Pour ces différentes raisons, la quantité de composé d'ammonium déposée sur le fil de base est de préférence comprise entre 0,05 et 0,15 % du poids de verre.

La mèche de fils ainsi traités présente l'avantage, aussitôt après sa coupe, de se subdiviser et de se disperser en autant de fils coupés qu'elle comprenait de fils de base. La dispersion des fils coupés, observée à la surface de la matière ou du mélange de constituants auquel ils sont associés, est plus régulière que celle observée avec une mèche de fils non traités. Les meilleurs résultats obtenus l'ont été avec des composés d'ammonium quaternaire choisis dans le groupe des éthylsulfate d'ammonium.

Dans le cadre de l'invention, la longueur des fils coupés utilisés est inférieure à 100 millimètres et, de préférence, comprise entre 20 et 50 millimètres.

D'une façon générale, les enroulements de mèches de fils utilisés dans le cadre de l'invention se présentent, de préférence, sous forme de bobines. Cette présentation permet de conservert la stabilité de l'enroulement et une extraction régullière de la mèche jusqu'à la fin. Il n'en est pas de même lorsque l'enroulement se présente sous la forme d'une pelote d'où la mèche est extraite depuis l'intérieur de ladite pelote, à la dévidée. Près de la fin, la pelote se réduit à un cylindre dont la paroi est de plus en plus mince ; sa stabilité sur un engin de chantier en déplacement devient aléatoire ; de plus, l'extrême fin de l'enroulement peut être entraînée sans que la mèche soit complètement déroulée, ce qui peut perturber le fonctionnement de la machine de coupe.

Les avantages de la présente invention seront mieux perçus grâce à l'exemple comparatif décrit ci-après et illustré par les figures suivantes :
- **la figure 1** montre la répartition de fils coupés utilisés antérieurement à l'invention,
- **la figure 2** montre la répartition des fils coupés selon l'invention.

Des fils de verre sont fabriqués dans les mêmes conditions, les filaments qui les constituent étant revêtus de la même composition d'ensimage. Cette composition d'ensimage, comprenant notamment de l'acétate de polyvinyle comme agent filmogène, un méthacrylsilane comme agent de pontage, un polyester comme plastifiant et un lubrifiant non-ionique, est de type connu. Deux catégories d'enroulements sont fabriquées : la première (I), à partir des fils simplement ensimés; la seconde (II), à partir de fils ensimés ayant passé dans une solution aqueuse à 35 % poids de matière d'un produit commercialisé sous la marque de fabrique EMERSTAT 6660. Ce produit appartient à la famille des éthylsulfate d'ammonium quaternaire. La quantité de produit déposée sur le fil, exprimé en extrait sec, est de 0,08 % du poids de verre.

Ces deux types d'enroulements ont été utilisés dans les mêmes conditions sur un chantier. Les mèches de fil on été coupées par un dispositif du type coupeur de projection ; les mèches de fil formées de fils de base de 50 tex présentaient un titre global de 2400 tex.

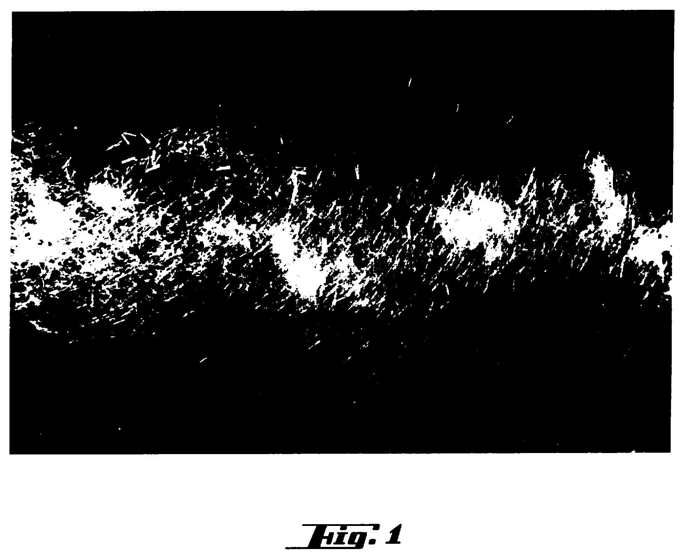

La figure 1 montre la répartition obtenue, sur un sol formé de gravillons enrobés de bitume, de fils coupés simplement ensimés. Les fils se répartissent de manière irrégulière sur une surface donnée et forment par endroit des amas de tailles différentes.

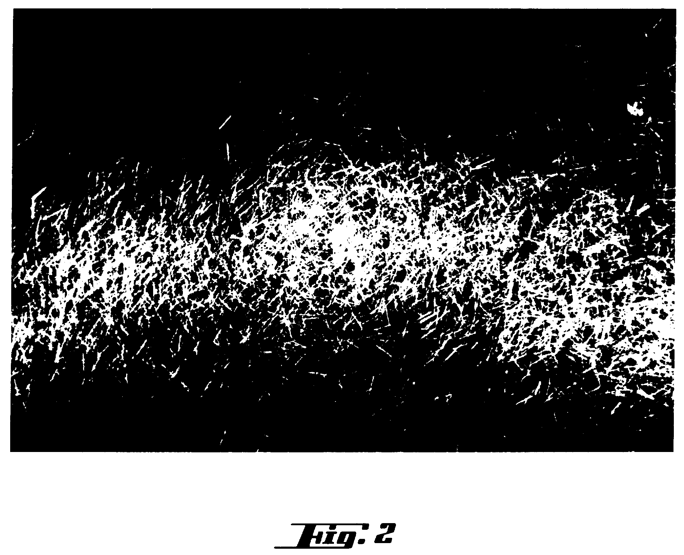

La figure 2 montre la répartition des fils coupés surensimés par la solution aqueuse d'EMERSTAT 6660. Cette répartition est beaucoup plus régulière que celle observée avec un fil simplement ensimé. Cette répartition beaucoup plus uniforme permet d'utiliser au mieux la capacité de renforcement des fils coupés ; elle permet également de réaliser des couches ou des revêtements qui présentent des propriétés mécaniques relativement constantes sur de grandes surfaces.

## Revendications

1. Procédé de production d'une couche ou d'un revêtement déposé lors de la confection ou la réfection de rues, routes, d'aires de stationnement ,etc, selon lequel on associe des matières minérales telles que pierres, sable, graviers et/ou un liant à base de matières hydrocarbonées telles que bitume ou asphalte, avec des fibres, **caractérisé en ce que** :
• on dépose sur un substrat une couche de matière formée soit de granulés minéraux, soit à base de matières hydrocarbonées,
• on coupe au-dessus de ladite couche des fils de verre dont la surface est revêtue d'au moins un composé antistatique choisi parmi les composés d'ammonium quaternaire, lesdits fils de verre coupés étant constitués d'une multiplicité de filaments dont le diamètre moyen est supérieur à 5 et se répartissant uniformément à la surface de ladite couche,
• puis on dépose éventuellement, sur cette couche une deuxième couche formée de la même matière que la première.

2. Procédé selon la revendication 1, **caractérisé en ce que** :
• on dépose une couche de granulés minéraux sur un transporteur en déplacement,
• on coupe des mèches de fils au-dessus du transporteur de manière à obtenir des fils coupés qui se répartissent par gravité à la surface de ladite couche,
• on recouvre éventuellement lesdits fils par une couche de granulés minéraux,
• on mélange lesdits granulés et lesdits fils puis on répartit le mélange sous la forme d'une couche de forme.

3. Procédé selon la revendication 1, **caractérisé en ce que** :
• on dépose sur le sol une couche de liant à base de matières hydrocarbonées,
• on coupe et on projette des fils de verre sur ladite couche,
• on dépose éventuellement une seconde couche de liant, à base de matières hydrocarbonées, sur lesdits fils coupés,
• on dépose éventuellement sur la seconde couche de liant un matériau minéral tel que des gravillons.

4. Procédé selon l'une quelconque des revendications précédentes, **caractérisé en ce qu**'on associe aux matières minérales et/ou hydrocarbonées des fils de verre coupés dont la longueur est inférieure à 100 millimètres.

5. Procédé selon l'une quelconque des revendications précédentes, **caractérisé en ce que** la quantité pondérale de composé antistatique déposé sur les fils coupés utilisés est comprise entre 0,04 et 0,3% du poids de verre.

6. Procédé selon la revendication 5, **caractérisé en ce que** la quantité pondérale de composé antistatique est comprise entre 0,05 et 0,15% du poids de verre.

7. Procédé selon la revendication 5, **caractérisé en ce que** le composé d'ammonium quaternaire déposé sur le fil est choisi dans le groupe des éthyl-sulfate d'ammonium.
